# EUROPEAN PATENT SPECIFICATION

(11) **EP 2 819 937 B1**
(45) Date of publication and mention of the grant of the patent: **11.10.2017**
(21) Application number: 12780816.0
(22) Date of filing: 06.08.2012
(51) Int. Cl.: B65G 23/06, B65G 23/34, B65G 21/18

(54) **A CONVEYOR**
SPIRALFÖRDERER
CONVOYEUR SPIRALE

(30) Priority: 28.02.2012 IT BO20120092
(43) Date of publication of application: 07.01.2015
(73) Proprietor: BETT SISTEMI s.r.l., 41012 Carpi (Modena) (IT)
(72) Inventor: BELLOI, Romeo, I-42015 Correggio (Reggio Emilia) (IT)
(74) Representative: Fanzini, Valeriano
(86) International application number: PCT/IB2012/054009
(87) International publication number: WO 2013/128246

(56) References cited:
- EP-A1- 0 544 085
- WO-A1-2011/143528
- GB-A- 2 056 400
- JP-A- 10 157 820
- US-A- 6 152 291
- US-A1- 2006 175 181
- US-A1- 2006 285 947

## Description

### Technical Field

This invention relates to a conveyor defining a product conveying path which extends in a spiral.

### Background Art

Known in the prior art are conveyors which define a product conveying path extending in a spiral and which comprise a respective mounting frame and a conveyor belt of the type with articulated links, in particular links made of rigid plastic material, the conveyor belt being made to follow a spiral path composed of a plurality of successive coiled stretches, or turns.

These prior art spiral conveyors only comprise belt operating means at one end of the lifting spiral. Thus, the disadvantage of a prior art conveyor of this type is that the pulling action it applies to the conveyor belt is limited and does not allow the spiral conveyor to be sufficiently extended in height. Indeed, over certain heights, the pulling action at only one end of the spiral path does not provide sufficient power to effectively drive the conveyor belt.

Moreover, in the prior art conveyors, where the pulling action is provided at only one end of the spiral path, belt drive is not uniform along the spiral path, resulting in risks of local jamming and sudden releasing of the conveyor belt on the conveying guides, and/or risks of vibrations and unwanted irregularities on the belt surface.

Besides creating excessive noise, this also reduces conveyor performance and may even damage the products transported, especially if it causes the products to tip over and fall. EP 0544085 A1 discloses a chain conveyor with a drive device comprising a toothed wheel arranged coplanar between the lateral chains of the belt and discloses the features of the preamble of independent claim 1.

### Disclosure of the Invention

This invention proposes a new solution alternative to the solutions known to the prior art and such as to overcome one or more of the above mentioned drawbacks or problems and/or satisfy one or more of the needs described or inferable from the above.

Accordingly provided is a conveyor according to claim 1.

This provides a drive system which can operate the conveyor particularly effectively all along the spiral path, making it possible to obtain tall spiral conveyors which reach up to any required height.

### Brief Description of the Drawings

This and other innovative aspects are set out in the appended claims and their technical features and advantages are apparent from the detailed description which follows of a non-limiting example embodiment of it with reference to the accompanying drawings, in which:
- Figure 1 is a perspective view of a first preferred embodiment of the spiral conveyor according to this invention;
- Figure 2 is a perspective view of a detail showing the infeed and primary operating zone of the first preferred embodiment of the spiral conveyor according to the invention;
- Figure 3 is a perspective view of a detail showing the zone of transmission of drive power to an operating wheel at a respective turn of the first preferred embodiment of the spiral conveyor;
- Figure 4 is a perspective view of a detail showing the meshing zone where the operating wheel meshes with the conveyor belt of the first preferred embodiment of the spiral conveyor according to the invention;
- Figure 5A is a schematic side view of a second preferred embodiment of the conveyor;
- Figure 5B is a schematic top plan view of the second preferred embodiment of the conveyor;
- Figure 6 is a perspective view of a detail showing the meshing zone where the operating wheel meshes with the conveyor belt of the second preferred embodiment of the conveyor;
- Figure 7 is a perspective view from below of a detail showing the meshing and operating block of the conveyor belt of the second preferred embodiment of the conveyor;
- Figure 8 is a perspective view from below showing only the operating and meshing wheel for the conveyor belt of the second preferred embodiment of the conveyor.

### Detailed Description of the Preferred Embodiments of the Invention

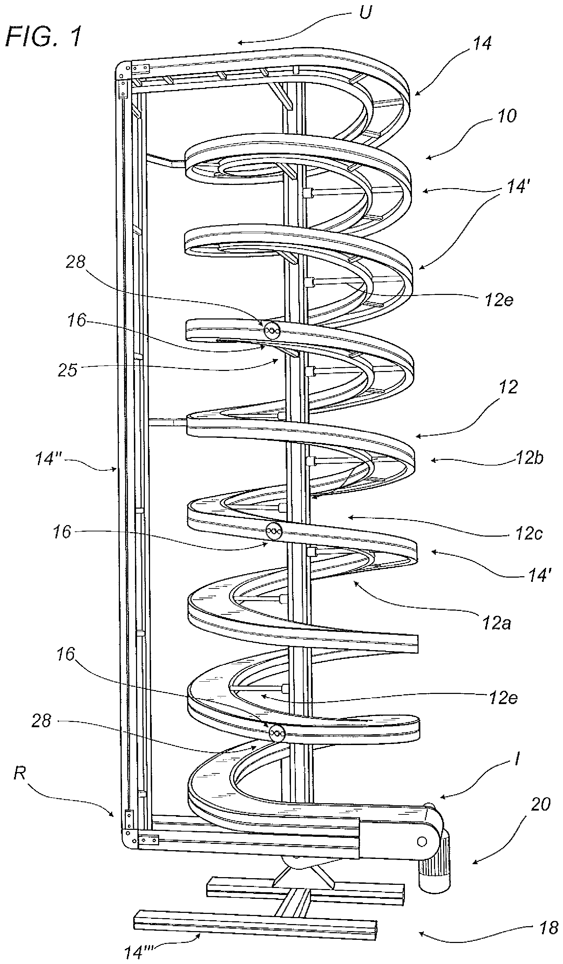

Figures 1 to 4 illustrate a first preferred embodiment of the conveyor 10, in particular a belt conveyor composed of a plurality of articulated links 141 made of a plastic material, in particular rigid plastic, such as acetalic resin, polyamide or the like.

More specifically, each link of the conveyor belt 14 has corresponding front and rear longitudinal protrusions which are transversely offset from each other and which are designed to be inserted between the longitudinal protrusions of the links upstream and downstream of it, respectively, in order to form the product supporting surface.

More specifically, the longitudinal protrusions of the link comprise respective lateral longitudinal surfaces, or faces, and a corresponding transversal end face.

In the links, the lateral longitudinal faces of adjacent protrusions are transversely spaced to form between them a space for insertion of a matching longitudinal protrusion of a longitudinally adjacent link of the conveyor belt.

The insertion space is also delimited by a corresponding transversal inner end surface or face extending from and joined to corresponding longitudinal surfaces or faces of longitudinally adjacent protrusions of the same link.

This conveyor belt is composed of a plurality of links placed side by side and each articulated to the links upstream and downstream of it through the agency of corresponding transversal hinge pins which allow the links to move relative to each other in the feed direction and, in particular, allowing the conveyor to move in a curve in the plane which the belt itself lies in.

In effect, on the inner side of the spiral curve, the links and hinge pins allow the corresponding ends of successive adjacent links to move close to and into contact with each other, while on the outer side of the spiral curve, they allow the corresponding ends of successive adjacent links to move apart, or away from, each other.

Thanks to suitable sliding guides, not illustrated in detail in the accompanying drawings, the conveyor belt 12 is made to follow a spiral path and to form a plurality of successive coils between a lower, or bottom, position and an upper, or top, position, allowing products to be transported from the level of one position at one height to the level of the other position at a different height.

As illustrated, the spiral lifting path is thus formed by a plurality successive coiled stretches, or turns, in particular for lifting the belt, the coiled stretches, or turns 14' being preferably, as illustrated, placed over and vertically aligned with each other.

In the embodiment illustrated, there are eight lifting stretches, or turns 14' defining the spiral belt lifting path.

As may be inferred from Figure 1, the conveyor also has a product infeed end I, at the lower, or bottom position, and an outfeed end U where the product leaves the spiral conveyor, at the upper, or top position.

Between the outfeed end U and the infeed end I, the conveyor also comprises a return stretch R, at one end of which, coinciding with infeed to the spiral path, primary, or main operating means 18 are provided.

As illustrated, preferably but not necessarily, the return stretch R of the conveyor belt has a first, downwardly extending vertical branch 14" and a second, horizontal branch 14''' which extends under the first turn, or lowermost turn 14' of the lifting spiral.

The conveyor belt operating means are, in particular, in the form of respective means for meshing with corresponding transversal or vertical surfaces of the conveyor belt links, in particular defined by corresponding inner end surfaces of the spaces between the rear longitudinal protrusions of each link.

In practice, the operating means are of the toothed wheel or sprocket type, whose teeth are inserted between respective longitudinally adjacent links of the belt, meshing with a corresponding transversal surface of the link preceding it in the feed direction of the belt itself.

Advantageously, the belt operating means comprise primary meshing and operating means 18 at one end of the lifting spiral, and at least one secondary meshing and operating member or wheel 16 at a respective turn 14' of the spiral path of the conveyor belt.

That way, an operating action is applied also along the spiral path of the conveyor belt.

This makes it possible to make conveyor belts which extend upwards in a spiral reaching heights greater than those reachable by conveyors made according to the prior art.

That also means that the operating action can be applied more uniformly along the spiral path, reducing vibrations and belt impact against the guides, thereby reducing noise and the risk of damaging the product. The belt operating means also comprise a plurality of conveyor belt meshing and operating members, or wheels 16 at respective coiled stretches or turns of the spiral path of the conveyor belt.

That way, the operating action applied is well distributed along the spiral path of the conveyor belt. This makes it possible to make conveyor belts which extend upwards to a considerable height, much greater than any height reachable before now by conveyors made according to the prior art.

That also means that the operating action can be applied more uniformly along the spiral path, reducing vibrations and belt impact against the guides, thereby reducing noise and the risk of damaging the product.

More specifically, the conveyor belt meshing and operating members or wheels 16 may be provided on all the lifting stretches or turns 14' defining the spiral path of the belt or, as illustrated, only on some of the lifting stretches or turns 14' defining the spiral lifting path of the conveyor belt.

Preferably, as illustrated, the meshing and operating members or wheels 16 of the conveyor belt are provided at alternate lifting stretches or turns 14' of the conveyor belt, spaced apart by corresponding lifting stretches or turns 14' in between them, where the meshing and operating members or wheels 16 are not provided.

As illustrated, in particular, the coiled spiral path of the conveyor belt, and the respective coiled lifting stretches or turns 14' have or define a corresponding retracted inner edge or side and a corresponding extended outer edge or side of the conveyor belt links.

In practice, as mentioned above, on the inner side "J" of the spiral coil, the corresponding ends of successive links are close together, and in particular in contact with each other, while on the outer side of the spiral coil, the corresponding ends of successive adjacent links are spaced apart, or away from each other.

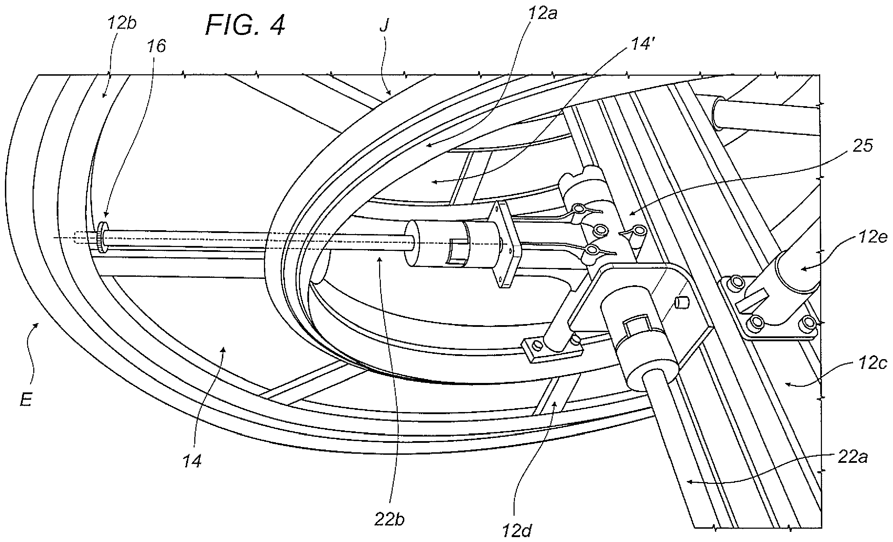

Advantageously, as may be well inferred from Figure 4, each meshing and operating member or wheel 16 is located at, or in the vicinity of, the outer side of the corresponding coiled stretch, or turn 14' of the conveyor belt 14.

Thus, the teeth of the operating wheel or member are practically sure to be inserted between consecutive links of the conveyor belt, thereby obtaining an effective operating action, without slipping or failure of the operating wheel to mesh with the conveyor belt.

Advantageously, in order to obtain an advantageous and easy to set up conveyor structure, the plurality of meshing and operating members or wheels 16 of corresponding lifting stretches or turns 14' of the conveyor belt are located on the same side of the spiral path of the conveyor belt.

More specifically, the plurality of meshing and operating members, or wheels 16 of corresponding lifting stretches or turns 14' of the conveyor belt are vertically aligned, or substantially vertically aligned, with each other.

Drive means 20 are provided for the meshing and operating members or wheels 16 of corresponding lifting stretches or turns 14' of the conveyor belt, the drive means advantageously and more specifically comprising a common drive motor 20 for the plurality of meshing and operating members or wheels 16 of corresponding lifting stretches or turns 14' of the conveyor belt.

As mentioned, the conveyor also comprises primary or main meshing and operating means 18 which are designed to mesh with a corresponding end of the spiral path of the conveyor and which, preferably, comprise at least a first and a second toothed meshing and operating wheel (not illustrated in detail in the accompanying drawings) for the conveyor belt, these toothed meshing and operating wheels 18 being transversely spaced from each other and being mounted on a transversal rotary shaft driven by a corresponding drive motor 20.

As may be inferred in particular from Figure 1, the primary meshing and operating means 18 are located at a bottom end "I" of the lifting spiral.

Advantageously, the drive means define a common drive motor 20 for one or more meshing and operating members or wheels 16 of corresponding lifting stretches or turns 14', as well as for the primary or main operating means 18 of the conveyor belt.

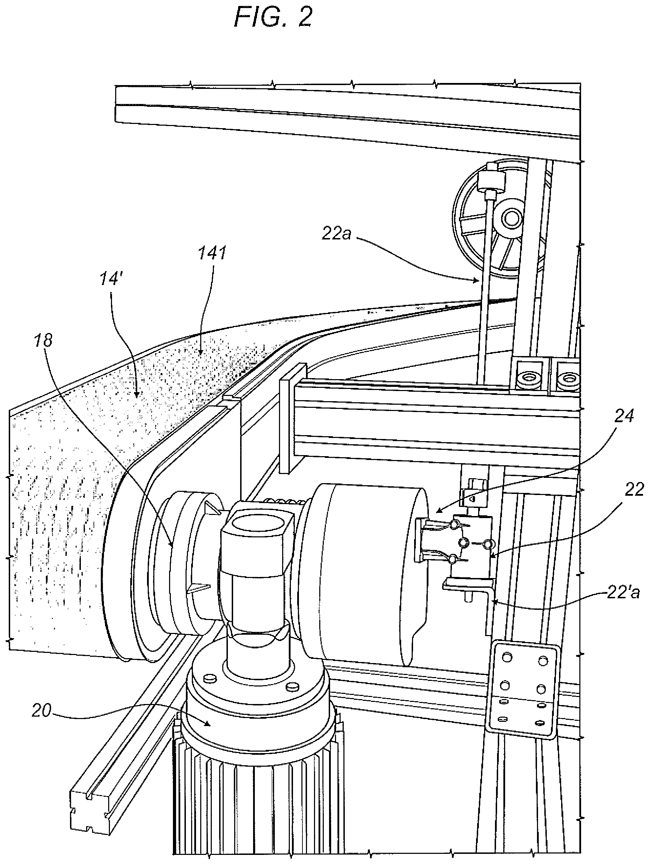

As may be well inferred from Figure 2, the drive motor 20 extends vertically and its output shaft meshes directly with the transversal shaft which mounts the meshing and operating means of the primary operating head 18.

The drive motor 20 is conveniently mounted on the mounting frame of the conveyor at the primary operating head 18.

Transmission means 22 are provided by which drive power is transmitted from the drive means 20 to the meshing and operating members, or wheels 16 of corresponding lifting stretches or turns 14' of the conveyor belt.

Advantageously, the drive motor 20 is conveniently connected to the transmission means 22 through a corresponding transmission, preferably defined by a corresponding toothed belt and corresponding pulleys denoted in their entirety by the reference numeral 24 in Figure 2.

The transmission means 22 by which drive power is transmitted from the drive means 20 to the meshing and operating members, or wheels 16 of corresponding turns 14' of the conveyor belt comprise main transmission means 22a by which drive power is transmitted to the plurality of meshing and operating members, or wheels 16 and secondary transmission means 22b by which drive power is transmitted to a respective meshing and operating member, or wheel 16 of a corresponding stretch, or turn 14' of the conveyor belt.

As illustrated, the primary transmission means 22a extend in height, in particular vertically, between a conveyor belt lower position and a conveyor belt upper position.

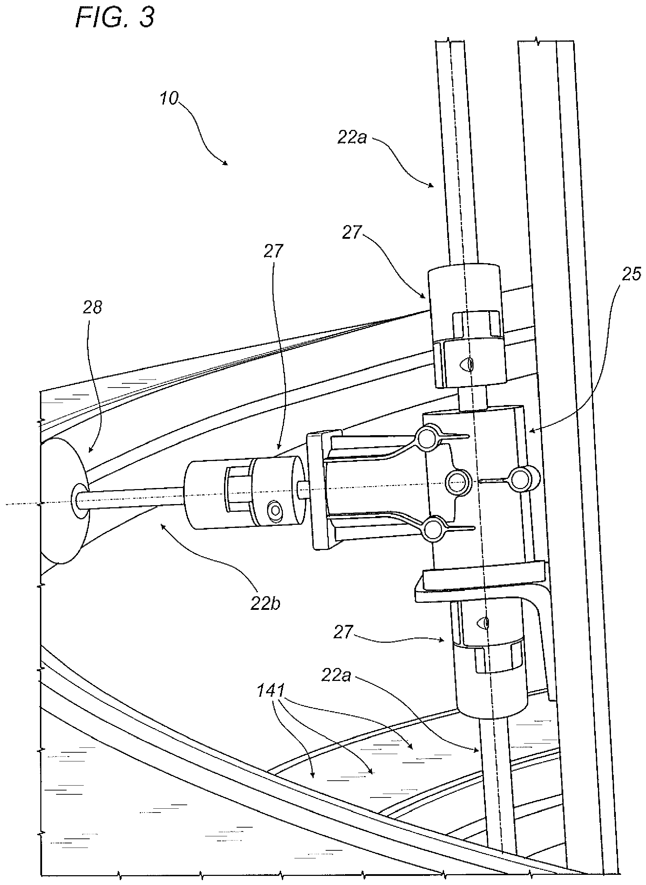

The secondary transmission means 22b in turn extend transversely, in particular horizontally, from the primary transmission means 22a, preferably, as illustrated in Figures 3 and 4, extending towards the same outer side of the spiral conveyor.

The primary transmission means 22a comprise rotary transmission shaft means, in particular a plurality of rotary shafts 22a which are operatively connected to each other and operatively connected to respective rotary shafts 22b defining the secondary transmission means by which drive is transmitted to the respective operating member or wheel 16.

In practice, the secondary transmission means are also in the form of a respective rotary shaft 22b which is operatively connected to the primary transmission means 22a.

As may be inferred from Figure 2, the primary transmission means have a respective end, in particular a lower end 22'a for operatively connecting the drive means 20, preferably, as mentioned above, through corresponding belt transmission means and pulleys 24, in particular comprising a respective control pulley which is mounted on a shaft coaxial with the shaft of the primary operating means and on the side opposite the drive motor 20.

As may be well inferred from the drawings, in particular Figure 3, there is a respective drive transmission coupling 25 at each drive power take-off to the secondary transmission means 22b.

More specifically, the drive transmission coupling 25 is of the three-way type, defined by corresponding spindles protruding from a tubular support or bracket, one spindle being connected through a respective quick-disconnect mechanical fitting 27, possibly in the form of a cardan type connection, to an input shaft of the primary transmission means 22a and being situated upstream along the transmission chain and, in particular, extending vertically and being positioned below. Another spindle protruding from the transmission coupling is in turn connected, through a respective quick-disconnect mechanical fitting, possibly in the form of a cardan type connection, to a drive output shaft from the respective coupling of the primary transmission means 22a, and is situated downstream along the transmission chain, in particular extending vertically and being positioned above.

A third spindle of the transmission coupling is connected through a respective quick-disconnect mechanical fitting 27, possibly in the form of a cardan type connection, to a drive output shaft towards the secondary transmission means 22b, and in particular extends, transversely, or horizontally, from the coupling 25.

Advantageously, the primary shaft 22a and, as illustrated, - or alternatively, only - the secondary shaft 22b of the drive transmission means has a respective end which is supported in a freely rotatable manner by the transmission coupling 25.

Also, as illustrated, the coupling 25 has a T-shaped tubular body whose main branch extends vertically and whose secondary branch extends horizontally and is situated horizontally at the secondary meshing and operating means 16 of the respective turn 14'.

The mounting frame 12 comprises opposed first and second sidewalls 12a, 12b which are transversely, or radially, spaced from each other and which, in particular, are connected by corresponding radial crossbars 12d, located under the conveyor belt.

The first and second sidewalls 12a, 12b define support and guide means for the conveyor belt 14 on the inner side and on the outer side of each curve, respectively.

The sidewalls 12a, 12b define, or extend along, a spiral path defining a plurality of coiled stretches or turns 14' placed over one another.

The mounting frame 12 has a central column 12c, supporting the sidewalls 12a, 12b, which, as illustrated, extends vertically and from which there extend, in particular, corresponding arms 12e, preferably horizontal, which support the respective sidewall, in particular, the sidewall 12a situated on the inner side of the curve.

Advantageously, the primary transmission means, in particular the rotary shafts 22a thereof, extend parallel to, and preferably alongside, the column, preferably the central supporting column 12c, and are supported by the selfsame column 12c.

More specifically, the respective drive transmission couplings 25 are fixed to the central supporting column 12c which thus supports, freely rotatably about the respective axis, the primary transmission means and one end of the secondary transmission means.

As illustrated, the secondary transmission means, in particular the corresponding transversal or radial shaft 22a, extend under and between the first and second sidewalls 12a, 12b which slidably support the conveyor belt 14.

The secondary transmission means 22a are thus supported freely rotatably by the respective sidewall which supports the conveyor belt 14, in particular by both of the sidewalls 12a, 12b.

More specifically, the respective sidewall has a corresponding perpendicular, or vertical wall, in particular extending under the belt 14' and in which there are corresponding holes, where corresponding bushes 28 are provided for rotatably supporting the transversal drive transmission shaft which mounts the respective meshing and operating member or wheel 16 of the conveyor belt.

Advantageously, the secondary transmission means are supported freely rotatably by the respective sidewall 12a, 12b of the spirally coiled stretch at the end opposite the power take-off end.

In practice, the meshing and operating member or wheel 16 of the conveyor belt is near the sidewall 12b on the outer side of the curve.

It will be understood, however, that although this radial arrangement of the meshing and operating member is particularly preferred and advantageous, another arrangement is also imaginable where the conveyor belt meshing and operating member is located between the centre line of the conveyor belt and the outer side of the selfsame conveyor belt.

In practice, at the respective sidewalls 12a, 12b there are a first and a second bushing 28, 28 for rotatably supporting a corresponding shaft 22b which mounts a corresponding operating wheel 16.

Advantageously, each member or wheel 16 is located under the conveyor belt 14 and meshes with the conveyor belt, which is conveniently held in contact with the teeth of the meshing and operating member 16, in particular thanks to the corresponding conveying guides, which are not illustrated in detail in the accompanying drawings and which may be of any type known to an expert in the trade.

Each member or wheel 16 is thus integral with a corresponding rotary transmission shaft 22b which extends under the conveyor belt 14 and parallel thereto.

As illustrated, the meshing and operating wheel 16 extends in a perpendicular, or vertical plane and has a wheel body, which is integral with the rotary mounting shaft, and a plurality of radial teeth for meshing with the links of the conveyor.

Thus provided is a conveyor which has a spiral lifting stretch which may reach considerable heights and which may be set up quickly and easily at a particularly limited cost.

The conveyor of the invention has a drive system with a conveyor belt operating action which is particularly uniform and effective all along the spiral path.

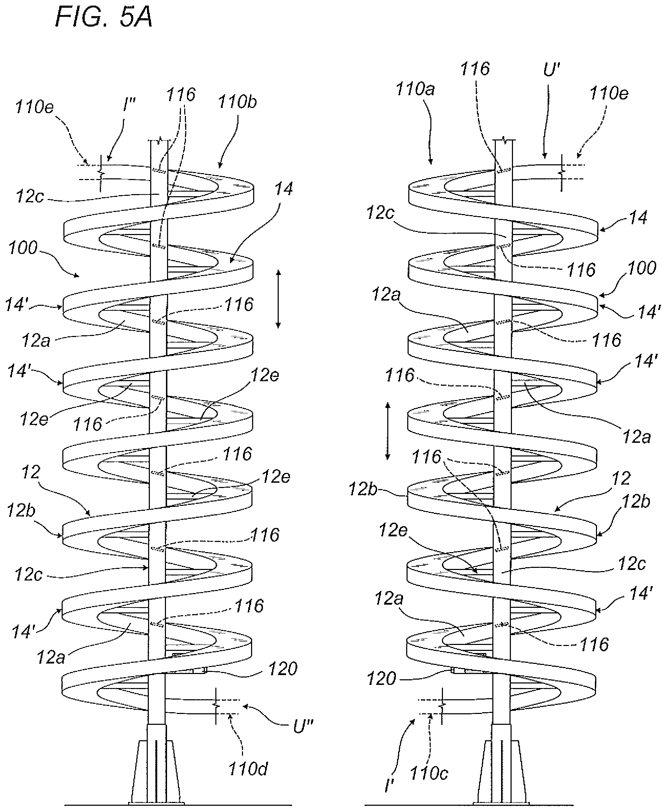

Figures 5A to 8 illustrate a second preferred embodiment 100 of the conveyor according to this invention.

The conveyor of the second preferred embodiment comprises a first spiral conveying element 110a and a second spiral conveying element 110b. More specifically, the first spiral conveying element 110a is in the form of a product conveyor lifting stretch whilst the second spiral conveying element 110b defines a conveyor path along which the product is lowered. As will become clearer as this description continues, however, it will be understood that the belt feed movement might be reversed, with the lifting and lowering stretches being, in this case, exchanged, respectively, for the lowering stretch (the spiral path 110a) and the lifting stretch (the spiral path 110b).

The second preferred embodiment of the conveyor has components which are identical to those of the first embodiment described above and which are not therefore described again in detail.

More specifically, both of the spiral conveying elements 110a and 110b comprise a plurality of turns which are identical to the turns of the first embodiment of the conveyor and which are not described again in detail.

The second embodiment of the conveyor also comprises conveying stretches which connect and/or are connected to the spiral conveying elements 110a and 110b, and which are schematically represented by dashed lines, denoted by the references 110c, 110d and 110e in the drawings.

In a preferred operating mode, the first, spiral conveying element 110a thus has a respective infeed end I' at the bottom position, and a respective outfeed end U', at the upper position, and the second, spiral conveying element 110b in turn has a respective infeed end I" at the upper position, and a respective outfeed end U", at the bottom position.

Drive means 120 may be provided at the infeed end of the first, spiral conveying element 110a, or at the outfeed end of the second, spiral conveying element 110b.

In that case, the position of the drive means 120 is advantageous for the assembly and maintenance of the same.

It will be understood, however, that a different position of the drive means, that is, at any other desired point on the intermediate conveying means 110a and 110b is also imaginable.

More specifically, each spiral conveying element of the second preferred embodiment of the conveyor also has respective, advantageous meshing and operating means 116 at respective turns 14' of the respective spiral conveyor.

In practice, in the second preferred embodiment, too, as in the first preferred embodiment, the operating means of the conveyor belt 14 comprise a plurality of meshing and operating members, or wheels 116 for the conveyor belt 14 which are distributed along the spiral path of the conveyor belt 14.

More specifically, in the second preferred embodiment, as in the first preferred embodiment, the operating means of the conveyor belt comprise a plurality of meshing and operating members, or wheels 116 for the conveyor belt which are uniformly spaced from each other along the spiral path of the conveyor belt.

More specifically, advantageously, the operating means for the conveyor belt comprise a plurality of meshing and operating members, or wheels 116 for the conveyor belt 14 which are spaced along a stretch corresponding to a part of the length of one turn 14' or along a stretch corresponding to the length of one or more turns 14'.

More specifically, in the second preferred embodiment, the meshing and operating members, or wheels 116 for the conveyor belt are spaced along a stretch corresponding to the length of a single turn 14'.

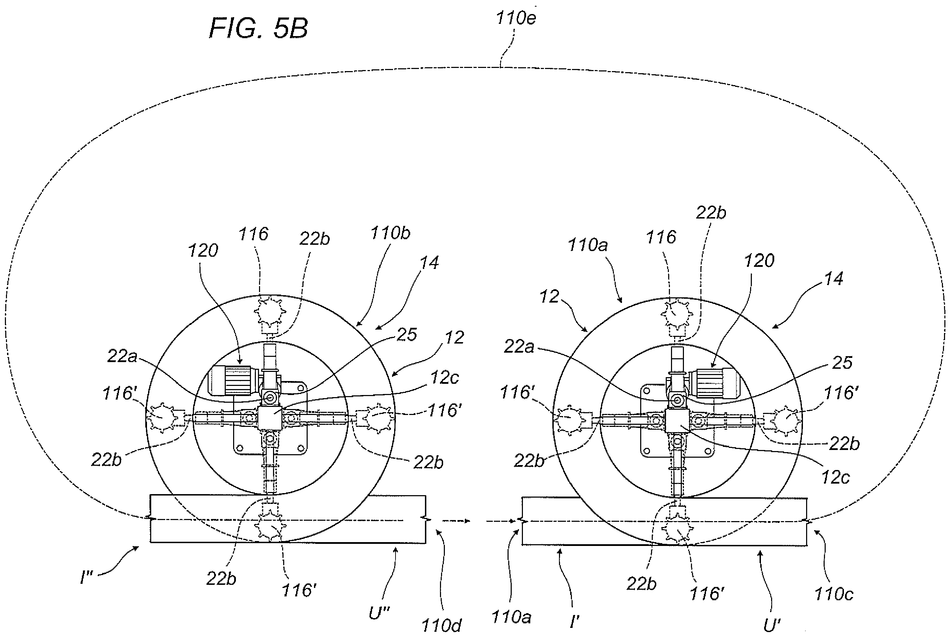

The operating means of the belt, however, might imaginably comprise a plurality of conveyor belt meshing and operating members, or wheels 116 distributed along each turn of the conveyor belt. For example, there might be four operating members, or wheels for each turn, angularly spaced by 90° from each other, as may be inferred from Figure 5B, which illustrates possible additional meshing wheels 116' with dashed lines.

In practice, the conveyor belt operating means might comprise a plurality of meshing and operating members, or wheels 116, 116' which are angularly spaced from each other, and, more specifically, which are angularly spaced uniformly, or angularly equispaced, from each other.

Preferably, however, the meshing and operating members 116 of the second preferred embodiment are, as illustrated, located at all the turns of each spiral conveyor 110a and 110b.

In practice, each turn of the spiral path 110a, 110b has a respective meshing and operating member schematically represented by dashed lines in Figure 5A.

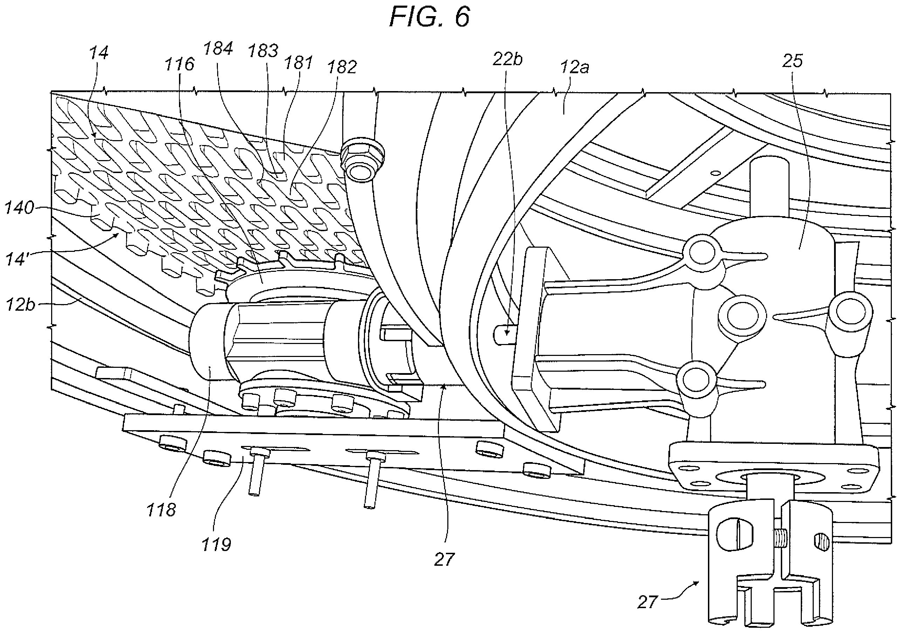

Advantageously, as may be well inferred from Figures 6 to 8, the meshing and operating member or wheel 116 used in the second preferred embodiment lies and moves, or turns, in a plane which is advantageously parallel, or substantially parallel, to the plane defined by the conveyor belt 14, in particular to the conveying surface of the conveyor belt itself.

In the second preferred embodiment, too, the meshing and operating member or wheel 116 is located under the conveyor belt, that is to say, under the transversal product supporting surface of the conveyor belt.

From another viewpoint, each meshing and operating member, or wheel 116 has a respective axis of rotation which is perpendicular, or substantially perpendicular, to the plane defined by the conveyor belt 14, in particular to the conveying surface of the conveyor belt 14 itself.

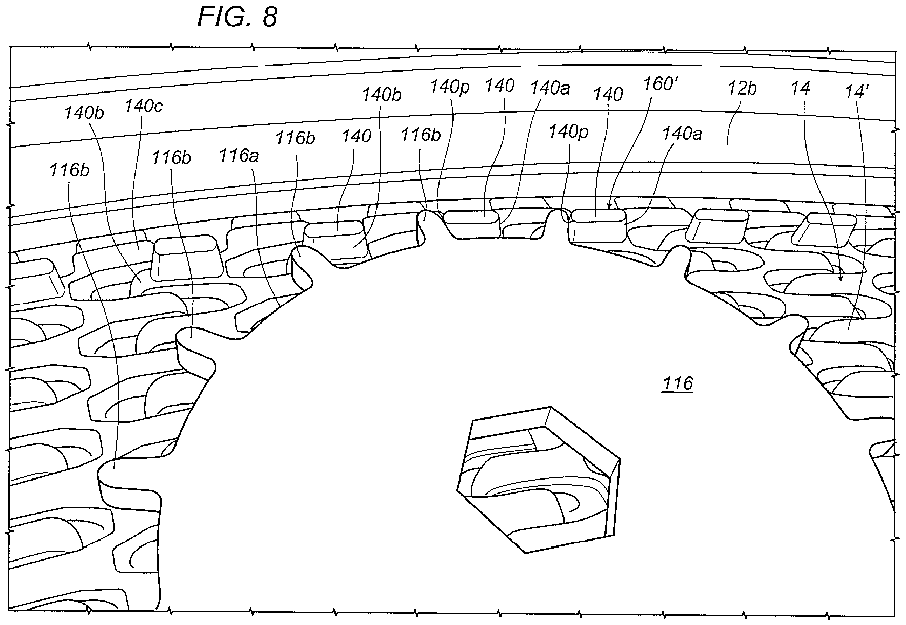

As may be well inferred from Figure 8, the meshing and operating member or wheel is in the form of a flattened element with a circular outer profile 116a, from which a plurality of circumferentially distributed, radial meshing teeth 116b extend.

As illustrated, the meshing and operating wheel 116 also has a shaped central hole 116c for receiving a respective spindle for mounting and driving the wheel.

In practice, at each turn 14', meshing and operating means are provided for the conveyor belt which are in the form of a respective member or wheel 116 defined by a flattened element, in particular made from a corresponding shaped metal sheet with a circumferential profile 116a, from which a plurality of radial meshing teeth 116b extend.

Advantageously, the conveyor belt 14, in particular the product conveying surface thereof, rests on, or more specifically, runs on the respective meshing and operating member or wheel 116.

Advantageously, the underside surface 14" of the conveyor belt 14 rests on the flat top face of the respective member or wheel 116.

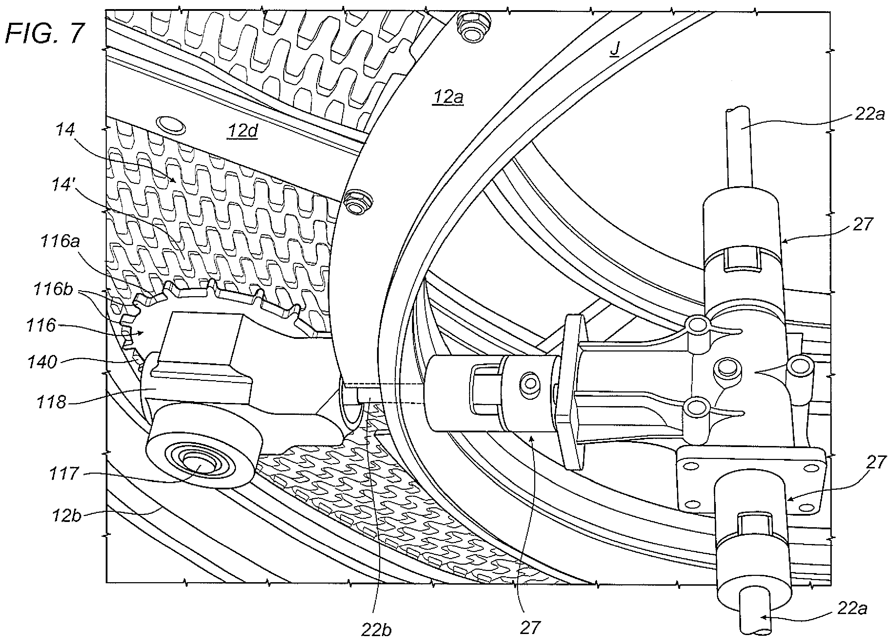

For the purpose, as may be inferred from Figures 7 to 9, the conveyor belt 14, in particular in conformity with the one forming the object of international patent application WO 2011/067737A, is composed of a plurality links made of suitable plastic material by moulding and together defining a supporting surface for the product to be conveyed, the links being joined to each other in articulated fashion in particular through the agency of corresponding connecting hinge pins.

In particular, each link comprises a plurality of opposite longitudinal protrusions 181, 182, which extend longitudinally on both sides, or longitudinal directions, of the link.

In more detail, the link or shaped block, comprises a plurality of front longitudinal protrusions 181 and a plurality of rear longitudinal protrusions 182, which are longitudinally offset with respect to the front longitudinal protrusions 181.

In practice, the link 18 comprises respective pluralities of longitudinal protrusions 181, 182 which extend on both longitudinal sides or edges of the link and where the longitudinal protrusions of one plurality are offset in a longitudinal direction relative to the longitudinal protrusions of the other plurality.

As illustrated, the front and rear longitudinal protrusions 181, 182 are transversally spaced from each other in such a way as to form, between transversally adjacent protrusions, respective spaces 183, 184 for receiving the longitudinal protrusions of a longitudinally adjacent link.

As may be inferred in particular from Figure 8, at each turn 14' of the conveyor belt 14, meshing and operating means are provided for the conveyor belt which, in order to operate the belt, mesh with means 140 which protrude perpendicularly from the conveyor belt 14, in particular from a corresponding surface 14" of the conveyor belt itself.

The perpendicularly protruding means 140 protrude from the bottom of the conveyor belt 14, in particular from the corresponding underside surface 14" of the product conveying surface of the conveyor belt when the selfsame conveyor belt is travelling along a positive feed stretch.

Advantageously, the means which protrude perpendicularly from the conveyor belt are in the form of respective protrusions 140, each having a respective perpendicular surface for engaging a corresponding tooth of the operating member or wheel 116.

More specifically, the perpendicular engagement surface is the rear surface 140p of the protrusion 140, in the case of normal feed direction, or the front perpendicular surface 140a, when the belt is driven in the opposite feed direction.

More specifically, the means which protrude perpendicularly from the conveyor belt 14 comprise a respective protrusion 140 which extends from a respective link 14 of the conveyor belt.

Advantageously, the perpendicularly protruding means 140 are provided at, or in the vicinity of, an outer side 140' of the coiled stretch of the conveyor belt 14.

In practice, therefore, meshing and operating means are provided for the conveyor belt, in particular at a respective turn 14' of the conveyor belt, which are perpendicularly under the conveyor belt 14 and which are provided at, or in the vicinity of, an outer side 140' of the coiled stretch of the belt.

More specifically, the perpendicularly protruding means 140 for engaging the meshing and operating means 116 extend from a longitudinal protrusion 140b of the belt link, in particular a longitudinal protrusion which is close to, or preferably immediately adjacent, the longitudinal lateral end protrusion 140c of the respective link.

More specifically, the perpendicularly protruding means 140 for engaging the meshing and operating means 116 constitute means for engaging and sliding against guide means at corresponding coiled stretches of the conveyor belt 14, these guide means not being illustrated in detail in the accompanying drawings and being made in accordance with the above mentioned international patent application WO 2011/067737 A1.

More specifically, the perpendicularly protruding means 140 have an inner face 140d, facing towards the inside of the belt, for engaging and sliding against a corresponding outer curved surface of a guide strip for radially retaining the conveyor belt 14 along the plane curved stretches thereof.

This member or wheel 116 is particularly advantageous.

Indeed, the meshing action is particularly effective and avoids the risk of the belt slipping relative to the wheel. Nor is it necessary to provide special retaining means for perpendicularly holding the belt against the wheel 116 at the meshing zone.

Further, the meshing and operating member or wheel 116 is also well suited to provide an effective drive action in spiral paths moving downwards.

As illustrated, the operating wheel 116 is mounted on a respective rotary shaft 117, with which the wheel 117 is mechanically engaged.

The rotary mounting shaft of the meshing and operating member or wheel extends perpendicularly to the belt 14, in particular to the conveying surface thereof.

The rotary mounting shaft 117 of the meshing and operating member or wheel 116 receives motion from a respective rotary shaft 22b which is oriented transversely to the belt or parallel to the conveying surface of the belt 14, in the same way as the corresponding transversal shaft of the transmission means of the first preferred embodiment.

Thus, for transmitting drive motion to the meshing members, or wheels 116, the spiral conveying elements of the second preferred embodiment of the conveyor have means which are the same as those provided for the first preferred embodiment and which are not therefore described again in detail.

More specifically, in the second preferred embodiment, too, the transversal transmission shaft 22b extends under the conveying surface of the conveyor belt 14.

In practice, advantageously, the rotary shaft 117 which mounts the operating wheel 116 receives drive motion from a transmission shaft 22b which is oriented at a defined angle, in particular at a right angle to the shaft 117 of the operating wheel 116, through the agency of suitable angular transmission means, in particular in the form of a corresponding bevel gear, not illustrated in detail in the accompanying drawings.

In practice, each member or wheel 116 is driven by a corresponding rotary shaft 22b which extends under the conveyor belt 14.

In practice, each member or wheel 16, 116 is driven by a corresponding rotary shaft 22b which extends parallel to the conveyor belt 14.

As illustrated, there is a mounting block 118 for the rotary shaft 117 which mounts the operating wheel 116, the block 118 housing, in particular the angular transmission means or gear.

The mounting block 118 is supported from below by a supporting crossbar 119 which is supported, in particular, by a sidewall, and preferably, as illustrated, by both of the sidewalls E and J of the conveyor belt 14.

As illustrated, the crossbar 119 is fixed by its underside to the sidewalls of the conveyor belt and supports the block 118, which is thus positioned perpendicularly between the crossbar 119 and the underside surface 14" of the positive feed stretch of the conveyor belt 14, and transversely across the sidewalls E, J which support and guide the conveyor belt.

As illustrated, drive means are provided which comprise a drive motor 120 for the plurality of meshing and operating members, or wheels 116 of corresponding turns 14' of the spiral path of the conveyor belt which is situated within the spiral path.

More specifically, the drive means comprise a common drive motor 120 which is located at a position below the respective spiral path 110a, 110b.

More specifically, the drive motor 120 of the respective spiral path or element 110a, 110b is mounted on the respective mounting column 12c of the spiral path itself, the column 12c being preferably and advantageously located centrally of the spiral path.

The motor 120 drives respective angular transmission couplings 25 which are identical to those of the first preferred embodiment and which are fixed to the mounting column 12c.

In practice, the common motor 120 directly drives only one gear which is integral therewith and rotationally drives the main transmission means 22a, that is, the vertical shaft or the plurality of vertical shafts 22a of the main transmission means. It will be understood, however, that although this embodiment of the drive and transmission means is especially preferred, other solutions might be used. In particular, a single drive motor for each individual operating wheel 116 might imaginably be used.

Advantageously, in particular thanks to this operating wheel 116, the drive means 120 are suitable for moving the conveyor belt 14 along the respective spiral stretch in a respective feed direction or, alternatively, in the opposite feed direction. For this purpose, all that needs to be done is to reverse the direction of rotation of the corresponding drive motor 120.

More specifically, it is evident that thanks to this belt drive system, which is distributed all along the spiral path, it is possible to make tall conveyors of any required height, which may reach considerable heights.

Moreover, the spiral conveyor of the invention is particularly suitable as a temporary storage unit or buffer, especially for a production or product sorting line.

Furthermore, the structure of the conveyor of the invention is quick and easy to set up.

It will obviously be understood that although not specifically illustrated in the accompanying drawings, in the second preferred embodiment, too, it is possible to use means of known type and well within the knowledge of an expert in the trade for laterally supporting and guiding the product on the conveyor belt.

The invention described is susceptible of industrial application.

## Claims

1. A conveyor (10) comprising a mounting frame (12) and a conveyor belt (14) of the type with articulated links (141), the conveyor belt (12) being made to follow a respective spiral path, for conveying the products and being composed of a plurality of successive coiled stretches, or turns (14'); the conveyor further comprising operating means for the belt; the operating means for the belt (14) comprise a plurality of meshing and operating members, or wheels (116) for the conveyor belt (14) which are distributed along the spiral path of the conveyor belt; the conveyor belt meshing and operating members, or wheels (116) being located under the conveyor belt (14), preferably at a respective turn (14') of the conveyor belt and have a respective axis of rotation which is perpendicular, or substantially perpendicular, to the conveying surface defined by the conveyor belt (14) **characterized in that** the articulated links are made of plastic material, preferably of rigid plastic; the conveyor belt (14) is composed of a plurality of links, each constituted by a shaped block made of suitable plastic material by moulding, and together defining a supporting surface for the product to be conveyed, the links being joined to each other in articulated fashion through the agency of corresponding connecting hinge pins; each link comprises a plurality of front longitudinal protrusions (181) and a plurality of rear longitudinal protrusions (182), which are longitudinally offset with respect to the front longitudinal protrusions (181); said front and rear longitudinal protrusions (181, 182) being transversally spaced from each other in such a way as to form, between transversally adjacent protrusions, respective spaces (183, 184) for receiving the longitudinal protrusions of a longitudinally adjacent link; and **in that** for the belt to be operated, the conveyor belt meshing and operating member, or wheel (116) engages with means (140) which protrude perpendicularly from the conveyor belt (14) and downwardly from the same belt, said means which protrude perpendicularly from the conveyor belt comprising a respective protrusion (140) which extends from a respective link of the conveyor belt (14) protruding from the corresponding underside surface (14") of the belt.

2. The conveyor according to claim 1, **characterized in that** the plurality of meshing and operating members, or wheels (116) for the conveyor belt (14) are spaced along a stretch corresponding to a part of the length of one turn (14') or along a stretch corresponding to the length of one or more turns (14').

3. The conveyor according to any of the preceding claims, **characterized in that** the respective conveyor belt meshing and operating member, or wheel (16, 116) is at, or in the vicinity of, an outer side of the corresponding coiled stretch of the conveyor belt and **in that**, preferably, the perpendicularly protruding means (140) which protrude from the conveyor belt are provided at, or in the vicinity of, an outer side of the coiled stretch of the conveyor belt (14).

4. The conveyor according to any of the preceding claims, **characterized in that** the respective conveyor belt meshing and operating member, or wheel (116) lies and moves, or turns, in a plane which is parallel, or substantially parallel, to the conveying surface of the conveyor belt (14) itself.

5. The conveyor according to any of the preceding claims, **characterized in that** the respective conveyor belt meshing and operating member, or wheel (116) is defined by a flattened element forming a circumferential profile from which a plurality of radial meshing teeth extend.

6. The conveyor according to any of the preceding claims, **characterized in that** the respective conveyor belt meshing and operating member, or wheel (116) is in the form of a respective member, or wheel (116) on which the underside surface of the conveyor belt (14) rests.

7. The conveyor according to any of the preceding claims, **characterized in that** the perpendicularly protruding means (140) extend from a longitudinal protrusion of the belt link, in particular a longitudinal protrusion which is immediately adjacent to the longitudinal lateral end protrusion of the respective link.

8. The conveyor according to any of the preceding claims, **characterized in that** the perpendicularly protruding means (140) define means for engaging and sliding against guide means at corresponding coiled stretches of the conveyor belt (14).

9. The conveyor according to any of the preceding claims, **characterized in that** the operating wheel (116) is mounted on a respective rotary mounting shaft (117), **in that** the rotary mounting shaft (117) for the operating wheel (116) receives motion from a rotary shaft (22b) oriented transversely or parallel to the conveying surface of the belt (14), and **in that** the rotary mounting shaft (117) for the operating wheel (116) receives motion from a shaft (22b) which is oriented at a respective angle to the wheel shaft through the agency of suitable angular motion transmission means, being in particular in the form of a gear equipped with corresponding bevel wheels.

10. The conveyor according to any of the preceding claims, **characterized in that** the plurality of meshing and operating members, or wheels (16, 116) of corresponding turns (14') of the spiral path of the conveyor belt are located on the same side of the spiral path of the conveyor belt.

11. The conveyor according to any of the preceding claims, **characterized in that** it comprises drive means (20, 120) for the respective meshing and operating member, or wheel (16), in particular the drive means (120) are designed to move the conveyor belt (14) along the respective spiral stretch in a respective feed direction or, alternatively, in the opposite feed direction.

12. The conveyor according to any of the preceding claims, **characterized in that** it comprises transmission means (22) by which drive power is transmitted from drive means (20, 120) to meshing and operating members, or wheels (16, 116), in particular at corresponding turns (14') of the spiral path of the conveyor belt, **in that** the transmission means (22) by which drive power is transmitted from the drive means (20, 120) to the meshing and operating members, or wheels (16, 116) of corresponding turns (14') of the spiral path of the conveyor belt comprise main transmission means (22a) by which drive power is transmitted to the plurality of meshing and operating members, or wheels (16, 116) and secondary transmission means (22b) by which drive power is transmitted to a respective meshing and operating member, or wheel (16, 116) of a corresponding stretch, or turn, (14') of the conveyor belt, **in that** the primary transmission means (22a) extend in height, in particular vertically, between a conveyor belt lower position and a conveyor belt upper position and **in that** the secondary transmission means (22b) extend transversely from the primary transmission means (22a).

13. The conveyor according to claim 12, **characterized in that** the primary transmission means (22a) comprise rotary transmission shaft means, in particular a plurality of rotary shafts which are operatively connected to each other, **in that** the secondary transmission means (22b) comprise rotary transmission shaft means, in particular in the form of a respective rotary shaft which is operatively connected to the primary transmission means (22a), **in that** it comprises a respective drive transmission coupling (25) at each drive power take-off from the main transmission means, and **in that** the drive transmission coupling (25) is connected respectively to a drive input shaft of the primary transmission means (22a), situated upstream along the chain of transmission, and if necessary to a drive output shaft of the primary transmission means (22a), situated downstream along the chain of transmission, and to a drive output shaft of the secondary transmission means (22b).

14. The conveyor according to any of the preceding claims, **characterized in that** the mounting frame (12) has a mounting column (12c) which, in particular, extends vertically, and **in that** the primary transmission means (22a) extend parallel to the mounting column (12c), being in particular a central column, and are supported thereby.

15. The conveyor according to any of the preceding claims, **characterized in that** it comprises a first and a second spiral path (110a, 110b), in particular defining a lifting stretch and a lowering stretch of the conveyor belt itself.

## Patentansprüche

1. Förderer (10), umfassend einen Montagerahmen (12) und ein Förderband (14) vom Typ mit Gelenkverbindungen (141), wobei das Förderband (12) ausgelegt ist, um einem jeweiligen spiralförmigen Weg zu folgen, um Produkte zu fördern, und aus einer Vielzahl von aufeinanderfolgenden gewendelten Teilstücken oder Windungen (14') besteht, wobei der Förderer zudem Betriebsmittel für das Band umfasst, wobei die Betriebsmittel für das Band (14) eine Vielzahl an ineinandergreifenden und arbeitenden Elementen oder Rädern (116) für das Förderband (14) umfasst, die entlang des spiralförmigen Wegs des Förderbands angeordnet sind, wobei die ineinandergreifenden und arbeitenden Elemente oder Räder (116) des Förderbands unter dem Förderband (14) angeordnet sind, vorzugsweise an einer jeweiligen Trommel (14') des Förderbands, und eine jeweilige Rotationsachse aufweisen, die senkrecht oder im Wesentlichen senkrecht zur vom Förderband (14) definierten Förderfläche angeordnet ist, **dadurch gekennzeichnet, dass** die Gelenkverbindungen aus Kunststoffmaterial bestehen, vorzugsweise aus Hartkunststoff, wobei das Förderband (14) aus einer Vielzahl von Verbindungen zusammengesetzt ist, eine jede bestehend aus einem geformten Block, gefertigt aus einem geeigneten Kunststoffmaterial durch Formen, und zusammen definierend eine Stützoberfläche für das zu fördernde Produkt, wobei die Verbindungen miteinander gelenkig zusammengefügt sind, durch die Wirkung von entsprechenden Verbindungsgelenkzapfen, wobei eine jede Verbindung eine Vielzahl an frontseitigen Längsvorsprüngen (181) und eine Vielzahl an rückseitigen Längsvorsprüngen (182) aufweist, die längsseitig zu den frontseitigen Längsvorsprüngen (181) versetzt sind, wobei die frontseitigen und rückseitigen Längsvorsprünge (181, 182) quer voneinander beabstandet sind, sodass sie zwischen quer angrenzenden Vorsprüngen jeweilige Abstände (183, 184) bilden, um die Längsvorsprünge einer längsseitig angrenzenden Verbindung aufzunehmen, und dadurch, dass das ineinandergreifende und arbeitende Element oder Rad (116) des Förderbands, damit das Förderband betrieben werden kann, mit Mitteln (140) in Eingriff gelangt, die senkrecht aus dem Förderband (14) und nach unten gerichtet aus dem Band hervorstehen, wobei diese Mittel, die senkrecht aus dem Förderband hervorstehen, einen jeweiligen Vorsprung (140) umfassen, der sich von einer jeweiligen Verbindung des Förderband (14) erstreckt, hervorstehend aus der entsprechenden unterseitigen Oberfläche (14") des Bands.

2. Förderer nach Anspruch 1, **dadurch gekennzeichnet, dass** die Vielzahl von ineinandergreifenden und arbeitenden Elementen oder Rädern (116) des Förderbands (14) entlang eines Teilstücks beabstandet sind, entsprechend einem Teil der Länge einer Windung (14'), oder entlang eines Teilstücks entsprechend der Länge von einer oder mehreren Windungen (14').

3. Förderer nach einem der vorhergehenden Ansprüche, **dadurch gekennzeichnet, dass** sich das jeweilige ineinandergreifende und arbeitende Element oder Rad (16, 116) des Förderbands an einer Außenseite des entsprechenden gewendelten Teilstücks des Förderbands oder in deren Nähe befindet, und dadurch, dass die senkrecht hervorstehenden Mittel (140), die aus dem Förderband hervorstehen, vorzugsweise an einer Außenseite des gewendelten Teilstücks des Förderbands (14) oder in deren Nähe bereitgestellt sind.

4. Förderer nach einem der vorhergehenden Ansprüche, **dadurch gekennzeichnet, dass** das jeweilige ineinandergreifende und arbeitende Element oder Rad (116) des Förderbands in einer Ebene liegt und sich bewegt oder dreht, die parallel oder im Wesentlichen parallel zur Förderoberfläche des Förderbands (14) angeordnet ist.

5. Förderer nach einem der vorhergehenden Ansprüche, **dadurch gekennzeichnet, dass** das jeweilige ineinandergreifende und arbeitende Element oder Rad (116) des Förderbands durch ein abgeflachtes Element definiert ist, bildend ein Umfangsprofil, von dem sich eine Vielzahl an radial ineinandergreifenden Zähnen erstreckt.

6. Förderer nach einem der vorhergehenden Ansprüche, **dadurch gekennzeichnet, dass** das jeweilige ineinandergreifende und arbeitende Element oder Rad (116) des Förderbands die Form eines jeweiligen Elements oder Rads (116) aufweist, auf dem die unterseitige Oberfläche des Förderbands (14) ruht.

7. Förderer nach einem der vorhergehenden Ansprüche, **dadurch gekennzeichnet, dass** die senkrecht hervorstehenden Mittel (140) sich von einem Längsvorsprung der Bandverbindung erstrecken, insbesondere einem Längsvorsprung, der unmittelbar an den längsseitigen Endvorsprung der jeweiligen Verbindung angrenzt.

8. Förderer nach einem der vorhergehenden Ansprüche, **dadurch gekennzeichnet, dass** die senkrecht hervorstehenden Mittel (140) Mittel definieren, um an entsprechenden gewendelten Teilstücken des Förderbands (14) in Führungsmittel einzugreifen und gegen diese zu gleiten.

9. Förderer nach einem der vorhergehenden Ansprüche, **dadurch gekennzeichnet, dass** das arbeitende Rad (116) auf einer jeweiligen Rotationsmontagewelle (117) montiert ist, dass die Rotationsmontagewelle (117) für das arbeitende Rad (116) über eine Rotationswelle (22b) in Bewegung versetzt wird, quer oder parallel ausgerichtet zur Förderoberfläche des Bands (14), und dadurch, dass die Rotationsmontagewelle (117) für das arbeitende Rad (116) von einer Welle (22b) in Bewegung versetzt wird, die an einem jeweiligen Winkel zur Radwelle ausgerichtet ist, durch die Wirkung geeigneter Winkelantriebsmittel, die insbesondere die Form eines Getriebes aufweisen, das mit entsprechenden Kegelrädern ausgestattet ist.

10. Förderer nach einem der vorhergehenden Ansprüche, **dadurch gekennzeichnet, dass** die Vielzahl an ineinandergreifenden und arbeitenden Elementen oder Rädern (16, 116) entsprechender Windungen (14') des spiralförmigen Wegs des Förderbands auf derselben Seite des spiralförmigen Wegs des Förderbands angeordnet ist.

11. Förderer nach einem der vorhergehenden Ansprüche, **dadurch gekennzeichnet, dass** er Antriebsmittel (20, 120) für das jeweilige ineinandergreifende und arbeitende Element oder Rad (16) umfasst, wobei die Antriebsmittel (120) insbesondere ausgestaltet sind, um das Förderband (14) entlang des jeweiligen spiralförmigen Wegs in eine jeweilige Vorschubrichtung oder alternativ in die entgegengesetzte Vorschubrichtung zu bewegen.

12. Förderer nach einem der vorhergehenden Ansprüche, **dadurch gekennzeichnet, dass** er Getriebemittel (22) umfasst, durch die Antriebskraft von den Antriebsmitteln (20, 120) auf ineinandergreifende und arbeitende Elemente oder Räder (16, 116) insbesondere an entsprechenden Windungen (14') des spiralförmigen Wegs des Förderbands übertragen wird, dadurch, dass die Getriebemittel (22), durch die Antriebskraft von den Antriebsmitteln (20, 120) auf die ineinandergreifenden und arbeitenden Elemente oder Räder (16, 116) einer entsprechenden Windung (14') des spiralförmigen Wegs des Förderbands übertragen wird, Hauptgetriebemittel (22a) umfassen, durch die Antriebskraft auf eine Vielzahl von ineinandergreifenden und arbeitenden Elementen oder Rädern (16, 116) übertragen wird, und Hilfsgetriebemittel (22b), durch die Antriebskraft auf ein jeweiliges ineinandergreifendes und arbeitendes Element oder Rad (16, 116) eines entsprechenden Teilstücks oder einer Windung (14') des Förderbands übertragen wird, dadurch, dass die Hauptgetriebemittel (22a) sich in der Höhe insbesondere vertikal zwischen einer unteren Position des Förderbands und einer oberen Position des Förderbands erstrecken und dadurch, dass die Hilfsgetriebemittel (22b) sich quer von den Hauptgetriebemitteln (22a) erstrecken.

13. Förderer nach Anspruch 12, **dadurch gekennzeichnet, dass** die Hauptgetriebemittel (22a) Rotationsgetriebewellenmittel umfassen, insbesondere eine Vielzahl an Rotationswellen, die betriebswirksam miteinander verbunden sind, dadurch dass die Hilfsgetriebemittel (22b) Rotationsgetriebewellenmittel umfassen, insbesondere in der Form einer jeweiligen Rotationswelle, die betriebswirksam mit den Hauptgetriebemitteln (22a) verbunden ist, dadurch, dass er eine jeweilige Antriebsgetriebekupplung (25) an einem jeden Nebenabtrieb von den Hauptgetriebemitteln umfasst, dadurch, dass die Antriebsgetriebekupplung (25) jeweils mit einer Antriebswelle der Hauptgetriebemittel (22a) verbunden ist, angeordnet stromaufwärts entlang des Antriebsstrangs, und, sofern notwendig, mit einer Abtriebswelle der Hauptgetriebemittel (22a), angeordnet stromabwärts entlang des Antriebsstrangs, und mit einer Abtriebswelle der Hilfsgetriebemittel (22b).

14. Förderer nach einem der vorhergehenden Ansprüche, **dadurch gekennzeichnet, dass** der Montagerahmen (12) eine Montagesäule (12c) aufweist, die sich insbesondere vertikal erstreckt, und dadurch, dass die Hauptgetriebemittel (22a) sich parallel zur Montagesäule (12c) erstrecken, bei der es sich insbesondere um eine mittige Säule handelt, und von dieser gestützt werden.

15. Förderer nach einem der vorhergehenden Ansprüche, **dadurch gekennzeichnet, dass** er einen ersten und einen zweiten spiralförmigen Weg (110a, 110b) umfasst, insbesondere definierend ein Hebeteilstück und ein Senkteilstück des Förderbands.

## Revendications

1. Convoyeur (10) comprenant un support de montage (12) et une bande transporteuse (14) du type doté de liaisons articulées (141), la bande transporteuse (12) étant réalisée pour suivre un parcours en spirale respectif pour convoyer les produits et étant composée d'une pluralité de portions enroulées successives, ou tours (14') ; le convoyeur comprenant de plus des moyens de fonctionnement pour la bande ; les moyens de fonctionnement pour la bande (14) comprennent une pluralité d'éléments d'engrènement et fonctionnels ou roues (116) pour la bande transporteuse (14) étant répartis le long du parcours en spirale de la bande transporteuse ; les éléments d'engrènement et fonctionnels ou roues (116) étant situés sous la bande transporteuse (14), de préférence en correspondance d'un tour respectif (14') de la bande transporteuse et comportent un axe de rotation respectif étant perpendiculaire ou substantiellement perpendiculaire à la surface de convoyage définie par la bande transporteuse (14), **caractérisé en ce que** les liaisons articulées sont constituées d'un matériau plastique, de préférence d'un plastique rigide ; la bande transporteuse (14) est composée d'une pluralité de liaisons, chacune constituée d'un bloc façonné de matériau plastique approprié par moulage, et définissant ensemble une surface de support pour le produit à convoyer, les liaisons étant jointes les unes aux autres de manière articulée au moyen d'axes d'articulation de raccordement correspondants ; chaque liaison comprend une pluralité de saillies longitudinales antérieures (181) et une pluralité de saillies longitudinales postérieures (182) étant longitudinalement décalées par rapport aux saillies longitudinales antérieures (181) ; lesdites saillies longitudinales antérieures et postérieures (181, 182) étant transversalement espacées les unes des autres de manière à former, entre des saillies transversalement adjacentes, des espaces respectifs (183, 184) pour recevoir les saillies longitudinales d'une liaison longitudinalement adjacente ; et **en ce que** pour la bande à actionner, l'élément d'engrènement et fonctionnel de la bande transporteuse ou roue (116) se met en prise avec des moyens (140) qui dépassent perpendiculairement de la bande transporteuse (14) et vers le bas à partir de la même bande, lesdits moyens qui dépassent perpendiculairement de la bande transporteuse comprenant une saillie (140) respective se prolongeant d'une liaison respective de la bande transporteuse (14) dépassant de la surface du dessous (14") correspondante de la bande.

2. Convoyeur selon la revendication 1, **caractérisé en ce que** la pluralité d'éléments d'engrènement et fonctionnels ou roues (116) pour la bande transporteuse (14) sont espacés le long d'une portion correspondant à une partie de la longueur d'un tour (14') ou le long d'une portion correspondant à la longueur d'un ou plusieurs tours (14').

3. Convoyeur selon l'une quelconque des revendications précédentes, **caractérisé en ce que** l'élément d'engrènement et fonctionnel respectif de la bande transporteuse ou roue (16, 116) se trouve en correspondance, ou à proximité d'un côté extérieur de la portion enroulée correspondante de la bande transporteuse et **en ce que**, de préférence, les moyens perpendiculairement en saillie (140) dépassant de la bande transporteuse sont prévus en correspondance, ou à proximité d'un côté extérieur de la portion enroulée de la bande transporteuse (14).

4. Convoyeur selon l'une quelconque des revendications précédentes, **caractérisé en ce que** l'élément d'engrènement et fonctionnel respectif de la bande transporteuse ou roue (116) repose et se déplace ou tourne dans un plan étant parallèle ou substantiellement parallèle à la surface de convoyage de la bande transporteuse (14) elle-même.

5. Convoyeur selon l'une quelconque des revendications précédentes, **caractérisé en ce que** l'élément d'engrènement et fonctionnel respectif de la bande transporteuse ou roue (116) est défini par un élément aplati formant un profil circonférentiel duquel se prolonge une pluralité de dents radiales d'engrènement.

6. Convoyeur selon l'une quelconque des revendications précédentes, **caractérisé en ce que** l'élément d'engrènement et fonctionnel de la bande transporteuse ou roue (116) se présente sous la forme d'un élément respectif ou roue (116) sur lequel repose la surface du dessous de la bande transporteuse (14).

7. Convoyeur selon l'une quelconque des revendications précédentes, **caractérisé en ce que** les moyens perpendiculairement en saillie (140) se prolongent d'une saillie longitudinale de la liaison de bande, en particulier une saillie longitudinale étant immédiatement adjacente à la saillie terminale longitudinale latérale de la liaison respective.

8. Convoyeur selon l'une quelconque des revendications précédentes, **caractérisé en ce que** les moyens perpendiculairement en saillie (140) définissent des moyens se mettant en prise et coulissant contre des moyens de guidage en correspondance des portions enroulées correspondantes de la bande transporteuse (14).

9. Convoyeur selon l'une quelconque des revendications précédentes, **caractérisé en ce que** la roue fonctionnelle (116) est montée sur un arbre de montage rotatif (117) respectif, **en ce que** l'arbre de montage rotatif (117) pour la roue fonctionnelle (116) reçoit le mouvement à partir d'un arbre rotatif (22b) orienté transversalement ou de façon parallèle à la surface de convoyage de la bande (14), et **en ce que** l'arbre de montage rotatif (117) pour la roue fonctionnelle (116) reçoit le mouvement d'un arbre (22b) étant orienté selon un angle respectif par rapport à l'arbre de la roue au moyen de moyens de transmission de mouvement angulaire appropriés se présentant en particulier sous la forme d'un engrenage équipé de roues coniques correspondantes.

10. Convoyeur selon l'une quelconque des revendications précédentes, **caractérisé en ce que** la pluralité d'éléments d'engrènement et fonctionnels ou roues (16, 116) de tours (14') correspondants du parcours en spirale de la bande transporteuse sont situés du même côté que le parcours en spirale de la bande transporteuse.

11. Convoyeur selon l'une quelconque des revendications précédentes, **caractérisé en ce qu'**il comprend des moyens d'entraînement (20, 120) pour l'élément d'engrènement et fonctionnel respectif ou roue (16), en particulier les moyens d'entraînement (120) sont conçus pour déplacer la bande transporteuse (14) le long de la portions en spirale respective dans une direction d'alimentation respective ou, alternativement, dans la direction d'alimentation opposée.

12. Convoyeur selon l'une quelconque des revendications précédentes, **caractérisé en ce qu'**il comprend des moyens de transmission (22) par lesquels une force motrice est transmise à partir des moyens d'entraînement (20, 120) aux éléments d'engrènement et fonctionnels ou roues (16, 116), en particulier en correspondance de tours correspondants (14') du parcours en spirale de la bande transporteuse, **en ce que** les moyens de transmission (22) par lesquels la force motrice est transmise à partir des moyens d'entraînement (20, 120) aux éléments d'engrènement et fonctionnels ou roues (16, 116) d'un tour correspondant (14') du parcours en spirale de la bande transporteuse comprennent des moyens de transmission (22a) principaux par lesquels la force motrice est transmise à la pluralité d'éléments d'engrènement et fonctionnels ou roues (16, 116) et des moyens de transmission secondaires (22b) par lesquels la force motrice est transmise à un élément d'engrènement et fonctionnel respectif ou roue (16, 116) d'une portion correspondante ou tour (14') de la bande transporteuse, **en ce que** les moyens de transmission primaires (22a) se prolongent en hauteur, en particulier verticalement, entre une position inférieure de la bande transporteuse et une position supérieure de la bande transporteuse et **en ce que** les moyens de transmission secondaires (22b) se prolongent transversalement à partir des moyens de transmission primaires (22a).

13. Convoyeur selon la revendication 12, **caractérisé en ce que** les moyens de transmission primaires (22a) comprennent des moyens à arbre de transmission en rotation, en particulier une pluralité d'arbres rotatifs étant fonctionnellement reliés les uns aux autres, **en ce que** les moyens de transmission secondaires (22b) comprennent des moyens à arbre de transmission en rotation, en particulier sous la forme d'un arbre rotatif respectif étant fonctionnellement relié aux moyens de transmission primaires (22a), **en ce qu'**il comprend un accouplement de transmission d'entraînement (25) respectif en correspondance de chaque force motrice prise des moyens de transmission principaux, et **en ce que** l'accouplement de transmission d'entraînement (25) est relié respectivement à un arbre d'entrée d'entraînement des moyens de transmission primaires (22a) situé en amont le long de la chaîne de transmission et, si nécessaire, à un arbre de sortie d'entraînement des moyens de transmission primaires (22a) situé en aval le long de la chaîne de transmission, et à un arbre de sortie d'entraînement des moyens de transmission secondaires (22b).

14. Convoyeur selon l'une quelconque des revendications précédentes, **caractérisé en ce que** le support de montage (12) comporte une colonne de montage (12c) qui, en particulier, se prolonge verticalement, et **en ce que** les moyens de transmission primaires (22a) se prolongent parallèlement à la colonne de montage (12c), étant en particulier une colonne centrale, et sont supportés par celle-ci.

15. Convoyeur selon l'une quelconque des revendications précédentes, **caractérisé en ce qu'**il comprend un premier et un second parcours en spirale (110a, 110b), définissant en particulier une portion de levage et une portion d'abaissement de la bande transporteuse elle-même.
